# EUROPEAN PATENT SPECIFICATION

(11) **EP 2 692 019 B1**
(45) Date of publication and mention of the grant of the patent: **11.05.2022**
(21) Application number: 12716816.9
(22) Date of filing: 28.03.2012
(51) Int. Cl.: B05C 5/02, B05C 11/10, B05B 15/60

(54) **SYSTEM AND METHOD FOR RELEASABLY COUPLING A FLUID DISPENSER TO A DISPENSING SYSTEM**
SYSTEM UND VERFAHREN ZUR LÖSBAREN KOPPLUNG EINES FLUIDSPENDERS AN EIN SPENDERSYSTEM
SYSTÈME ET PROCÉDÉ PERMETTANT DE RACCORDER DE FAÇON LIBÉRABLE UN DISTRIBUTEUR DE FLUIDE À UN SYSTÈME DE DISTRIBUTION

(30) Priority: 28.03.2011 US 201161468239 P
(43) Date of publication of application: 05.02.2014
(73) Proprietor: Fishman Corporation, Hopkinton, MA 01748 (US)
(72) Inventor: BEEBE, W., Scott, Berkley, MA 02779 (US)
(74) Representative: Hopley, Joanne Selina
(86) International application number: PCT/US2012/030826
(87) International publication number: WO 2012/135269

(56) References cited:
- DE-U1-202005 012 870
- GB-A- 902 573
- JP-A- 2000 208 206

## Description

### FIELD

This disclosure relates to the coupling of a fluid dispenser to a fluid dispensing system.

### BACKGROUND

There are many situations in which it is desirable to dispense small controlled amounts of fluid in a specific location. One example is the dispensing of an adhesive in an automated production line, such as dispensing a fraction of a milliliter of UV-cured adhesive at the base of the needle of a hypodermic assembly where the adhesive is cured so as to hold the needle in place in the plastic base. There are myriad other situations in which small controlled amounts of fluid need to be dispensed very exactly.

In a production environment it is desirable to have as few interruptions as possible to an automated assembly line. One interruption occurs when a fluid dispenser needs to be refilled or replaced; the line must be halted, the fluid dispenser removed, and a full dispenser placed properly into position. Many assembly lines use several fluid dispensers, each of which needs to hold fluid. This situation leads to the need to stop production fairly frequently so as to replace empty fluid dispensers. It is thus desirable to design the fluid dispensing system in a manner that allows the fluid dispensers to be replaced as quickly as possible.

### SUMMARY

In general, one aspect of the disclosure features a push to connect-pull to disconnect connector system for releasably coupling a fluid dispenser to a fluid dispensing system. The connector system comprises first and second mating connectors for accomplishing a mechanical and electrical connection between the fluid dispenser and the fluid dispensing system, with each of the first and second connectors having a connector body. The connector body of the second connector has a connector face circumscribed by a projecting rim, a male portion of a male/female electrical connector projecting outward from the connector face, and, on different sides of the male portion, a plurality of openings, the connector body of the first connector having a connector face circumscribed by a plurality of projecting flexible fingers, each finger having a groove near its distal end such that the plurality of fingers is adapted to snap over the rim configured to be accepted into a plurality of grooves to thereby accomplishing a locking of the first and second connectors, the connector face of the connector body of the first connector having a plurality of projecting posts and a female portion of the male/female electrical connector, the plurality of projecting posts being configured to fit into the openings of the connector face of the connector body of the second connector when the rim is received in the plurality of grooves, and the female portion being configured to receive the male portion of the male/female electrical connector, and the first connector being adapted to be mounted to the dispensing system, and the second connector being adapted to be mounted to the fluid dispenser.

Various implementations may include one or more of the following features. The fluid dispenser with which the invention is used may comprise a syringe with a dispensing plunger. The fluid dispenser may further comprise a stepper motor operably connected to the syringe and adapted to move the plunger, and wherein the connector system further accomplishes an electrical interconnection between the dispenser and the structure. The fluid dispenser may further comprise a dispenser housing in which the stepper motor is located. The first connector may be mounted to the dispenser housing by one or more straps. The dispenser housing may define an outer shape, and the first connector may define an outer shape that is essentially a mirror image of the outer shape of the dispenser housing, such that the first connector is mounted to the dispenser housing with little space between them.

The first connector has a connector body that defines a connector face entirely circumscribed by a projecting rim, with the male portion of a male/female electrical connector projecting outward from the connector face and a plurality of post-receiving openings defined in the face on different sides of the projecting electrical connector. The second connector has a connector body that defines a connector face entirely circumscribed by a plurality of projecting flexible fingers that project outward from the body, wherein the fingers each define a groove near their distal end such that the fingers are adapted to snap over the rim of the first connector and the rim is sized and shaped to be accepted into the grooves, to accomplish a positive locking of the two connectors. The second connector defines a plurality of posts projecting outwardly from the face and located, sized and shaped to fit into the receiving openings of the first connector when the rim is received in the grooves. The second connector defines a female portion of the male/female electrical connector, which is located sized and adapted to receive the male electrical connector portion.

### BRIEF DESCRIPTION OF THE DRAWINGS

Figure 1 is a schematic view of a system for releasably coupling a fluid dispenser to a dispensing system.
Figure 2 is a schematic partially cross-sectional view of a fluid dispenser.
Figure 3 shows a fluid dispenser and a connector system.
Figure 4 is a cross-sectional view of the fluid dispenser of figure 3.
Figure 5 is a perspective view of a fluid dispenser and two connectors of a connector system.
Figure 6 is a front view of the fluid dispenser and connectors of figure 5.
Figure 7 is an end view of the fluid dispenser and connectors of figure 5.
Figure 8 is the other end view of the fluid dispenser and connectors of figure 5.
Figure 9 is a rear view of the fluid dispenser and connectors of figure 5.
Figure 10 is an enlarged perspective view of one connector of a connector system.
Figure 11 is an enlarged perspective view of a second connector of a connector system.
Figure 12 shows the connectors of figures 10 and 11 before they are mechanically and electrically engaged with each other.

### DETAILED DESCRIPTION

The embodiments depicted in the drawings accomplish a system that releasably couples an automated dispenser for a liquid adhesive to a dispensing system. As one example the dispenser can be coupled to an automation platform that is automatically moved (typically in two, three or six degrees of freedom) by a control system. The platform can be part of an adhesive dispensing system. The coupling system uses a two part push to connect-pull to disconnect connector structure or system that accomplishes both a mechanical and an electrical interconnection of the fluid dispenser to the dispensing system. The dispensing system carries one connector, and the other connector is coupled to the fluid dispenser. The connector system allows the dispenser to be removed from the dispensing system simply by pulling the dispenser off of the dispensing system. Since the electrical control signals and power to operate the dispenser are provided to the dispenser through the connector, there are no separate or additional control or power wires or cables connected to the fluid dispenser. Thus the dispenser with mounted connector can be removed from the system without the need to unplug or otherwise handle a separate cable running to the dispenser. The coupling disclosed herein can be used for dispensers for fluids other than adhesives. Typically but not necessarily the dispensers are used in automated manufacturing operations.

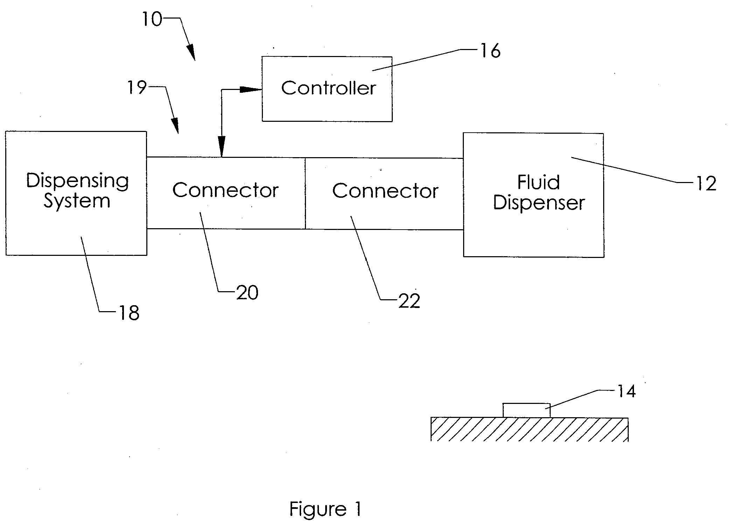

System 10 for releasably coupling a fluid dispenser to a structure is shown in figure 1. Fluid dispenser 12 is adapted to dispense a controlled amount of fluid onto structure 14. In one example, the fluid is a viscous adhesive and dispenser 12 is adapted to dispense a very carefully defined amount of fluid in a defined location or locations of structure 14. Dispensing system 18 may be fixed, or may be a movable platform that can be moved in one or more of the X, Y and Z directions, and possibly in up to six degrees of freedom, as is known in the field.

Controller 16 controls operation of fluid dispenser 12. Controller 16 can be programmed, for example using a programmable logic controller (PLC) or over a network (not shown). Fluid dispenser 12 operates to dispense the fluid; in one non-limiting embodiment the dispensing is accomplished with a stepper motor. Dispenser energizing signals are provided via connector 22 that is permanently or semi-permanently connected to dispenser 12. Connector 22 is releasably, and mechanically and electrically, coupled to connector 20. Connector 20 is permanently or semi-permanently coupled to dispensing system 18. Connectors 20 and 22 can be the two mating portions of a two-part mechanical and electrical push-pull type connector system 19.

Results of system 10 are that an empty fluid dispenser can be removed from the dispensing system simply by pulling the dispenser away from the dispensing system to dislodge connector 22 from connector 20. A replacement fluid dispenser filled with a predetermined amount of fluid can then be added simply by pushing the connector 22 that is mounted to the filled fluid dispenser onto connector 20. This allows quick and simple replacement without the need to loosen any brackets or other hardware that is typically used to couple a fluid dispenser to a fluid dispensing system.

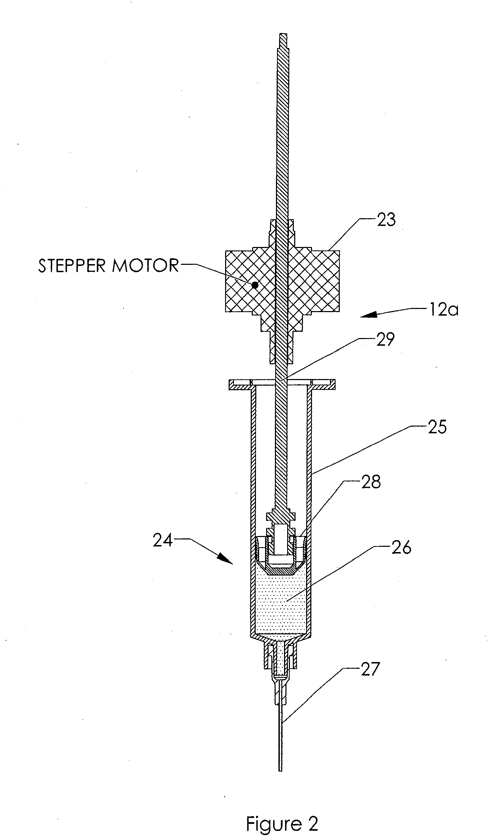

An example of a fluid dispenser 12a is shown in figure 2. Stepper motor 23 is adapted to move output shaft (e.g., lead screw) 29 up and down in a series of very small, carefully controlled steps. Plunger 28 is coupled to the distal end of shaft 29 and fits within chamber 25 of dispensing syringe 24. Fluid 26 fills the volume of syringe 24 between plunger 28 and the distal tip of dispensing nozzle (e.g., needle) 27. With this arrangement, when stepper motor 23 is incremented one step, a very small amount of fluid is dispensed from tip 27.

In one non-limiting example, there are a series of three dispense guns that can each operate syringes such as that shown in figure 2, with volumes of 3, 5, 10 and 30 ml. One dispense gun (the "SDAV" gun) has a stepper motor with a travel of 0.000125" per step. A second gun (the "MDAV" gun) has a stepper motor with a travel of twice that of the SDAV or 0.00025" per step. A third gun (the "LDAV" gun) has a stepper motor with a travel of twice that of the MDAV, or 0.0005" per step. The information below indicates the volume per step for each of the four syringe volumes, for each of these three dispense gun models.

### SDAV Dispensing Gun

- 1 step with a 3cc syringe barrel will yield 0.00023cc of fluid dispensed.
- 1 step with a 5cc syringe barrel will yield 0.00039cc of fluid dispensed.
- 1 step with a 10cc syringe barrel will yield 0.00065cc of fluid dispensed.
- 1 step with a 30cc syringe barrel will yield 0.00129cc of fluid dispensed.

### MDAV Dispensing Gun

- 1 step with a 3cc syringe barrel will yield 0.00045cc of fluid dispensed.
- 1 step with a 5cc syringe barrel will yield 0.00079cc of fluid dispensed.
- 1 step with a 10cc syringe barrel will yield 0.00131cc of fluid dispensed.
- 1 step with a 30cc syringe barrel will yield 0.00257cc of fluid dispensed.

### LDAV Dispensing Gun

- 1 step with a 3cc syringe barrel will yield 0.00090cc of fluid dispensed.
- 1 step with a 5cc syringe barrel will yield 0.00158cc of fluid dispensed.
- 1 step with a 10cc syringe barrel will yield 0.00261cc of fluid dispensed.
- 1 step with a 30cc syringe barrel will yield 0.00514cc of fluid dispensed.

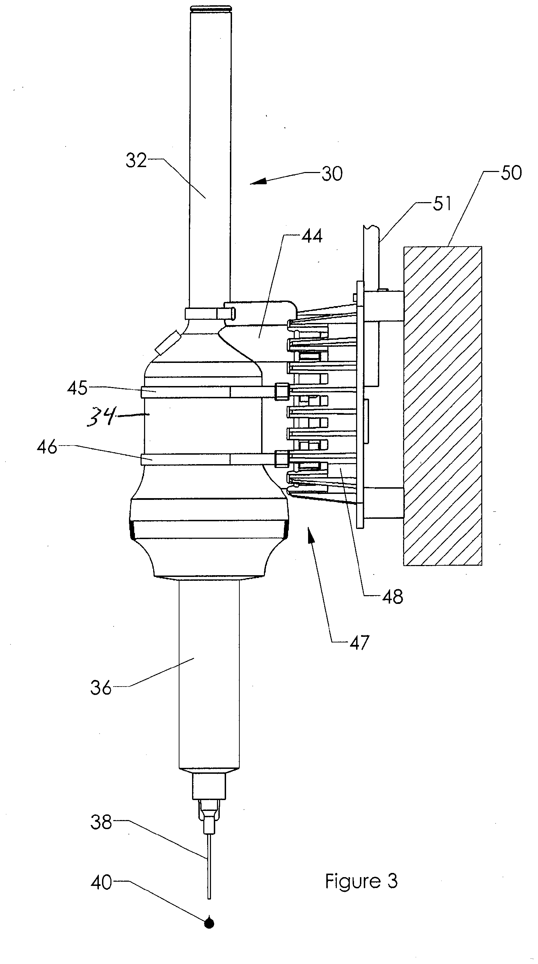

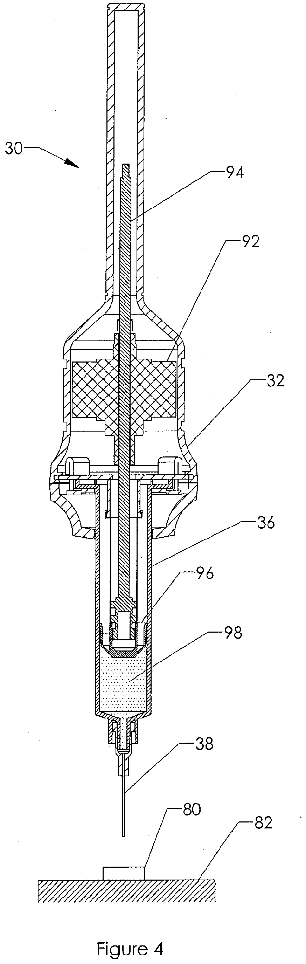

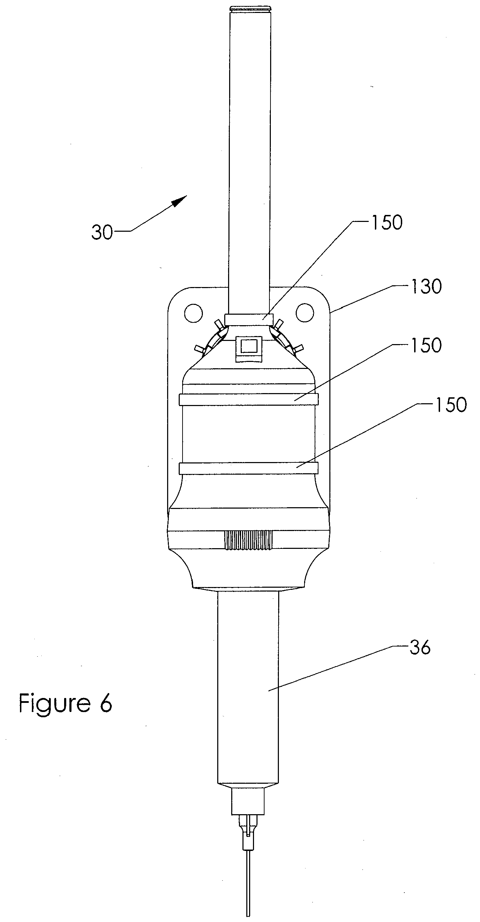

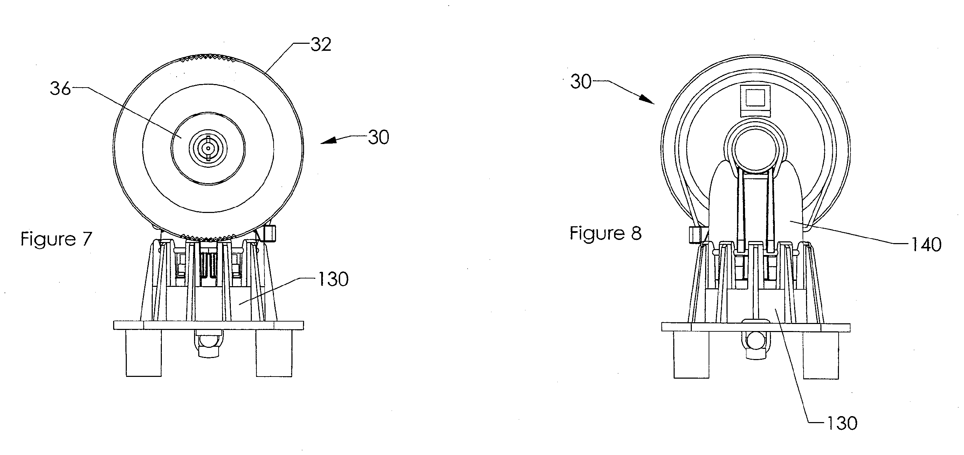

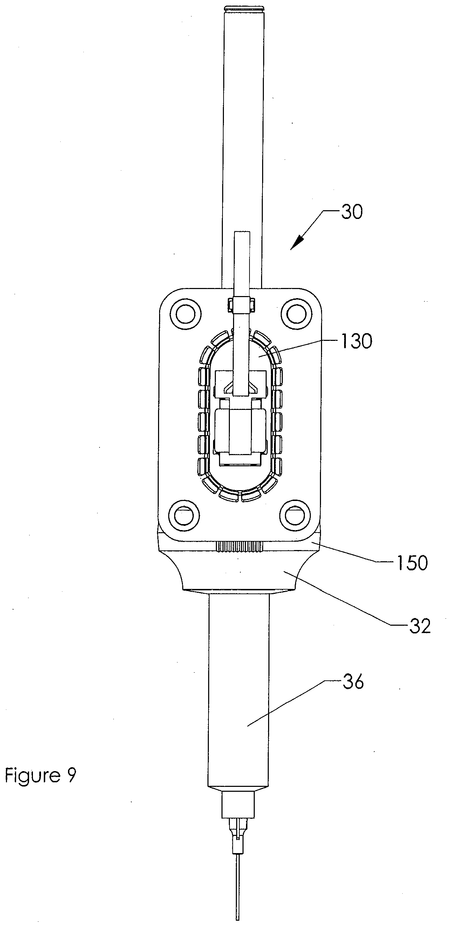

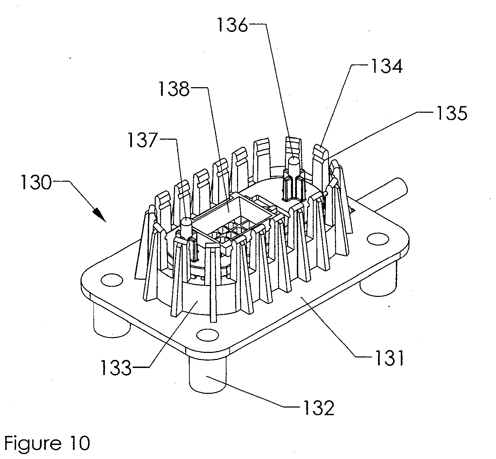

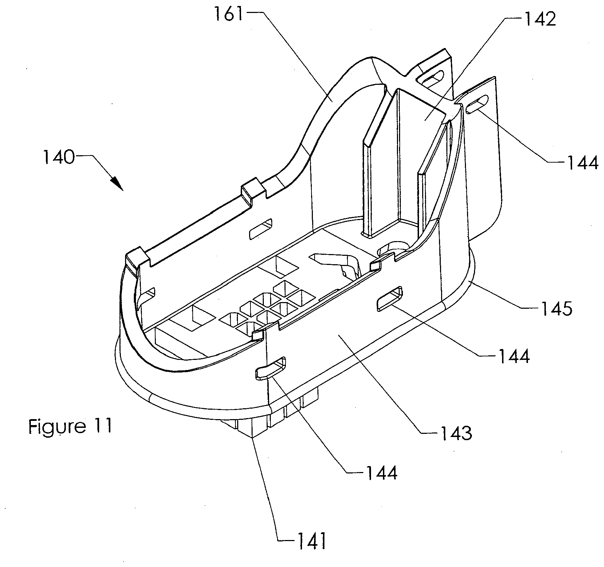

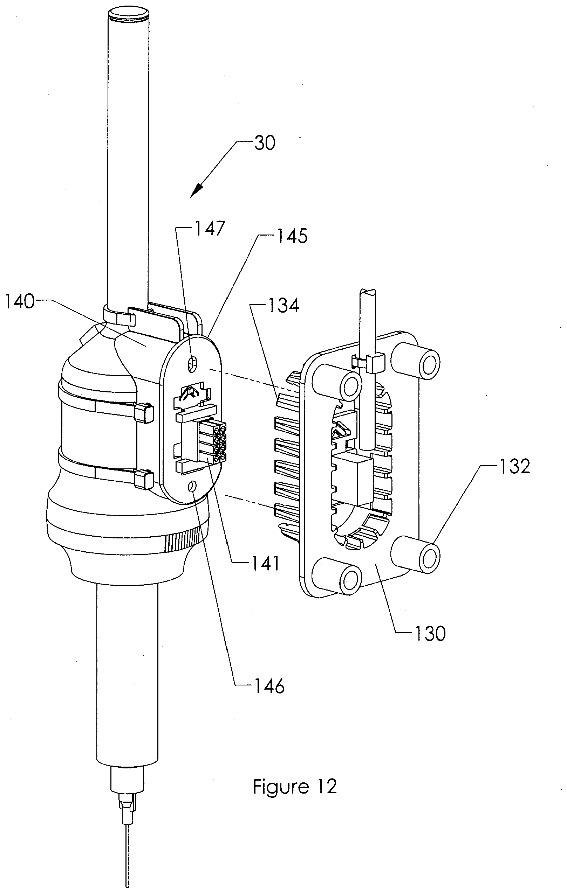

Additional examples of fluid dispensers are depicted in Figures 3-12. Fluid dispenser 30, figures 3 and 4, has housing 32 that contains a stepper motor 92 of the type described above. Syringe 36 with dispensing tip 38 is coupled to the stepper motor output shaft 94. Figure 3 shows drop 40 being dispensed from tip 38. Drop 40 is dispensed onto structure 80 located on table 82. Two-part mechanical and electrical connector system 47 is used to mechanically and electrically couple dispenser 30 to structure 50 that is part of the dispensing system. Connector system 47 comprises first connector 48 that is mechanically coupled to structure 50. Electrical continuity is accomplished via cable 51 that terminates at electrical contacts (not shown) that are part of connector 48. Second, mating connector 44 is mechanically coupled to housing 32 via straps 45 and 46 that encircle portion 34 and mechanically engage with (pass through) connector portion 44. Power and control signals are provided to the dispenser from a controller via mating electrical contacts built into connectors 44 and 48.

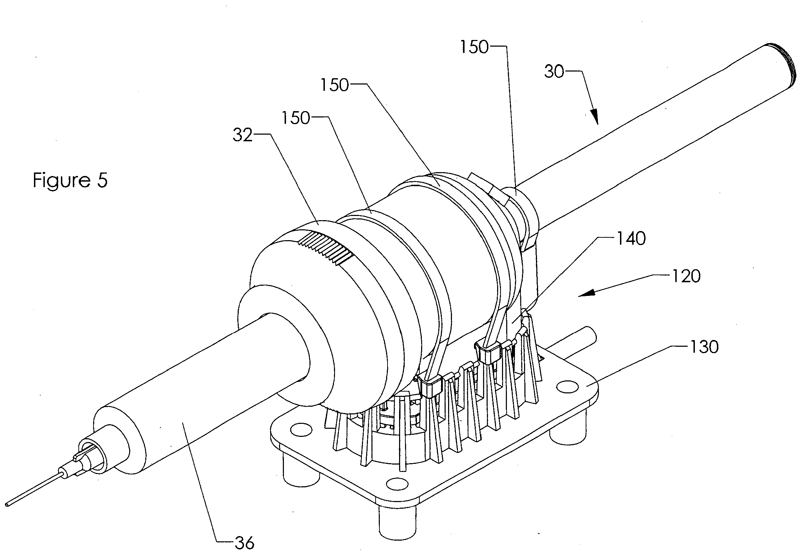

Figures 5-12 show additional details of a specific embodiment of two-part connector system 120. Connector system 120 comprises one connector 130 that is adapted to be fixed to a dispensing system via posts 132 that project from base 131. Machine screws or other fasteners fit through posts 132. The other connector 140 is fixed to dispenser housing 32 via strap(s) 150; one, two or more such straps may be used, two being shown here. Body 143 of connector 140 defines extension portion 142 that tightly couples to housing 32; surface 161 is shaped to conform to the shape of the outer surface of housing 32 against which it lies, so that connector 140 is almost effectively integral with housing 32. Slots 144 allow straps 150 to pass through body 143; there are one or more (typically, two) slots for each strap. Connectors 130 and 140 may each be unitary; they may be molded from a plastic material such as polyamide 6, 33% glass filled nylon.

Connector 130 further includes projecting flexible fingers 134 that project from body 133. Fingers 134 each define a groove 135 near the distal end. The fingers snap over rim 145 of connector 140 and rim 145 is accepted into grooves 135, to accomplish a positive locking of the two connectors. Fingers 134 circumscribe the entire connector body to define a receptacle for rim 145. Because fingers 134 are made of a plastic material that has some give, and because the fingers have free distal ends, the fingers are sufficiently flexible such that they release rim 145 when connector 140 is pulled away from connector 130. Posts 136 and 137 fit into receiving openings 146 and 147. Male electrical connector portion 141 fits into female electrical connector receiving portion 138, which has sloped sidewalls that guide portion 141 into portion 138. The posts and these guide features help to allow a blind connection of the two connector halves.

Connector system 120 thus accomplishes both mechanical and electrical connection between the dispenser and the dispensing system in a push on-pull off system that can be operated with one hand and without direct sight of the connection location on the dispense system.

The connector system herein could be used to couple fluid dispensers other than syringes. For example the dispenser could be a dispense gun or other device that is electrically operated to dispense a controlled amount of fluid.

## Claims

1. A push to connect-pull to disconnect connector system (120) for releasably coupling a fluid dispenser (12, 30) to a fluid dispensing system (18, 50), the connector system comprising:
first and second mating connectors (130, 140) for accomplishing a mechanical and electrical connection between the fluid dispenser and the fluid dispensing system, with each of the first and second connectors (130, 140) having a connector body (133,143),
the connector body (143) of the second connector (140) having a connector face circumscribed by a projecting rim (145), a male portion (141) of a male/female electrical connector projecting outward from the connector face, and, on different sides of the male portion (141), a plurality of openings (146, 147),
the connector body (133) of the first connector (130) having a connector face circumscribed by a plurality of projecting flexible fingers (134), each finger (134) having a groove (135) near its distal end such that the plurality of fingers (134) is adapted to snap over the rim (145) configured to be accepted into a plurality of grooves (135) to thereby accomplishing a locking of the first and second connectors (130,140),
the connector face of the connector body (133) of the first connector (130) having a plurality of projecting posts (136, 137) and a female portion (138) of the male/female electrical connector, the plurality of projecting posts (136, 137) being configured to fit into the openings (146, 147) of the connector face of the connector body (143) of the second connector (140) when the rim (145) is received in the plurality of grooves (135), and the female portion (138) being configured to receive the male portion (141) of the male/female electrical connector, and
the first connector (130) being adapted to be mounted to the dispensing system (18, 50), and the second connector (140) being adapted to be mounted to the fluid dispenser (12, 30).

2. The use of the connector system of claim 1 in a method for accomplishing coupling and decoupling of a fluid dispenser (12, 30) to a fluid dispensing system (18, 50), the method comprising:
mechanically and electrically coupling the fluid dispenser (12, 30) and the fluid dispensing system (18, 50) together by pushing the second connector (140) into the first connector (130); and
mechanically and electrically decoupling the fluid dispenser (12, 30) from the fluid dispensing system (18, 50) by pulling the second connector 140) away from the first connector (130).

## Patentansprüche

1. Verbindersystem (120), das bei einem Drücken verbindet und bei einem Ziehen trennt, zum lösbaren Koppeln einer Fluidabgabevorrichtung (12, 30) mit einem Fluidabgabesystem (18, 50), wobei das Verbindersystem Folgendes umfasst:
erste und zweite Steckverbinder (130, 140) zum Erreichen einer mechanischen und elektrischen Verbindung zwischen der Fluidabgabevorrichtung und dem Fluidabgabesystem, wobei jeder des ersten und des zweiten Verbinders (130, 140) einen Verbinderkörper (133, 143) aufweist,
wobei der Verbinderkörper (143) des zweiten Verbinders (140) eine Verbinderfläche, die durch einen vorstehenden Rand (145) begrenzt wird, einen männlichen Abschnitt (141) eines männlichen/weiblichen elektrischen Verbinders, der von der Verbinderfläche nach außen vorsteht, und, auf unterschiedlichen Seiten des männlichen Abschnitts (141), mehrere Öffnungen (146, 147) aufweist,
wobei der Verbinderkörper (133) des ersten Verbinders (130) eine Verbinderfläche aufweist, die durch mehrere vorstehende flexible Finger (134) begrenzt wird, wobei jeder Finger (134) nahe seinem distalen Ende eine Nut (135) derart aufweist, dass die mehreren Finger (134) angepasst sind, um über den Rand (145) zu schnappen, der konfiguriert ist, um in mehreren Nuten (135) akzeptiert zu werden, wobei dadurch ein Verriegeln des ersten und des zweiten Verbinders (130, 140) erreicht wird,
wobei die Verbinderfläche des Verbinderkörpers (133) des ersten Verbinders (130) mehrere vorstehende Stifte (136, 137) und einen weiblichen Abschnitt (138) des männlichen/weiblichen elektrischen Verbinders aufweist, wobei die mehreren vorstehenden Stifte (136, 137) konfiguriert sind, um in die Öffnungen (146, 147) der Verbinderfläche des Verbinderkörpers (143) des zweiten Verbinders (140) zu passen, wenn der Rand (145) in den mehreren Nuten (135) aufgenommen wird, und wobei der weibliche Abschnitt (138) konfiguriert ist, um den männlichen Abschnitt (141) des männlichen/weiblichen elektrischen Verbinders aufzunehmen, und
wobei der erste Verbinder (130) angepasst ist, um an dem Abgabesystem (18, 50) montiert zu werden, und der zweite Verbinder (140) angepasst ist, um an der Fluidabgabevorrichtung (12, 30) montiert zu werden.

2. Verwendung des Verbindersystems nach Anspruch 1 in einem Verfahren zum Erreichen des Koppelns und eines Entkoppelns einer Fluidabgabevorrichtung (12, 30) mit einem Fluidabgabesystem (18, 50), wobei das Verfahren Folgendes umfasst:
mechanisches und elektrisches Koppeln der Fluidabgabevorrichtung (12, 30) und des Fluidabgabesystems (18, 50) miteinander durch Drücken des zweiten Verbinders (140) in den ersten Verbinder (130); und
mechanisches und elektrisches Entkoppeln der Fluidabgabevorrichtung (12, 30) von dem Fluidabgabesystem (18, 50) durch Ziehen des zweiten Verbinders (140) weg von dem ersten Verbinder (130).

## Revendications

1. Système de connecteur à pousser pour connecter et à tirer pour déconnecter (120) pour coupler de façon libérable un distributeur de fluide (12, 30) à un système de distribution de fluide (18, 50), le système de connecteur comprenant :
des premier et second connecteurs de liaison (130, 140) permettant de réaliser une connexion mécanique et électrique entre le distributeur de fluide et le système de distribution de fluide, chacun des premier et second connecteurs (130, 140) ayant un corps de connecteur (133, 143),
le corps de connecteur (143) du second connecteur (140) présentant une face de connecteur limitée par un rebord en saillie (145), une partie mâle (141) d'un connecteur électrique mâle/femelle faisant saillie vers l'extérieur depuis la face de connecteur, et, sur différents côtés de la partie mâle (141), une pluralité d'ouvertures (146, 147),
le corps de connecteur (133) du premier connecteur (130) présentant une face de connecteur limitée par une pluralité de doigts flexibles en saillie (134), chaque doigt (134) présentant une rainure (135) près de son extrémité distale de telle sorte que la pluralité de doigts (134) sont adaptés pour s'encliqueter sur le rebord (145) conçu pour être accepté dans une pluralité de rainures (135) pour réaliser ainsi un verrouillage des premier et second connecteurs (130, 140),
la face de connecteur du corps de connecteur (133) du premier connecteur (130) présentant une pluralité de entretoises en saillie (136, 137) et une partie femelle (138) du connecteur électrique mâle/femelle, la pluralité de entretoises en saillie (136, 137) étant conçues pour s'emboîter dans les ouvertures (146, 147) de la face de connecteur du corps de connecteur (143) du second connecteur (140) lorsque le rebord (145) est reçu dans la pluralité de rainures (135), et la partie femelle (138) étant conçue pour recevoir la partie mâle (141) du connecteur électrique mâle/femelle, et
le premier connecteur (130) étant adapté pour être monté sur le système de distribution (18, 50), et le second connecteur (140) étant adapté pour être monté sur le distributeur de fluide (12, 30).

2. Utilisation du système de connecteur selon la revendication 1 dans un procédé permettant de réaliser le couplage et le découplage d'un distributeur de fluide (12, 30) à un système de distribution de fluide (18, 50), le procédé comprenant :
le couplage mécanique et électrique du distributeur de fluide (12, 30) et du système de distribution de fluide (18, 50) ensemble en poussant le deuxième connecteur (140) dans le premier connecteur (130) ; et
le découplage mécanique et électrique du distributeur de fluide (12, 30) du système de distribution de fluide (18, 50) en écartant le second connecteur (140) du premier connecteur (130).
